# EUROPEAN PATENT SPECIFICATION

(11) **EP 1 350 661 B1**
(45) Date of publication and mention of the grant of the patent: **18.11.2009**
(21) Application number: 03006863.9
(22) Date of filing: 28.03.2003
(51) Int. Cl.: B60K 35/00, B60K 37/06

(54) **Device and method to facilitate the control of units forming part of a vehicle equipment**
Gerät und Verfahren zur Erleichterung der Bedienung von Fahrzeugausstattungssystemen
Dispositif et méthode pour faciliter la commande des modules d'équipement de véhicule

(30) Priority: 05.04.2002 DE 10215092
(43) Date of publication of application: 08.10.2003
(73) Proprietor: TRW Automotive Electronics & Components GmbH, 78315 Radolfzell (DE)
(72) Inventor: Hafner, Ernst, 88709 Hagnau (DE); Bubb, Peter, Dr., 82194 Gröbenzell (DE); Götz, Matthias, 80796 München (DE)
(74) Representative: Prinz & Partner

(56) References cited:
- DE-A- 19 939 065
- DE-A- 19 941 967
- US-A1- 2001 025 376

## Description

The present invention relates to a device that facilitates the control of units forming part of the equipment in a vehicle, and to a method for this purpose.

Modern vehicles have to respond at an increasing rate to higher requirements, not only concerning the actual driving process, but also concerning technical actions taking place within a vehicle and which are not directly related to the actual driving process. Many people already use their car, for example, as a "mobile office" and deal with their necessary correspondence or their telephone calls during their journey. Especially for drivers who often use their cars for business, navigation systems are also gaining increasing interest. The equipment of a vehicle furthermore comprises, for example, units dedicated to entertainment, such as radios, cassette recorders, CD players, mini-disk players or DVD players. Higher-range vehicles are already now equipped with a computer with internet access. All the units not involved in the actual driving process, in addition to the vehicle itself, should be as easy to operate as possible, to make sure that the driver is as little as possible distracted from driving the vehicle.

To avoid a requirement of too many command devices for the various units, some of them are controlled by a central control unit, according to state-of-the-art technology. The control procedure is normally such that the operator initially selects the unit concerned and then enters specific parameters that prompt the unit to perform specific actions, such as the selection of a CD player within a unit-orientated menu structure, followed by the selection of a particular track, available on the CD, which is to be played. Between the units and the parameters, specific sub-menu items can also be interposed. This unit-orientated menu structure implies a number of disadvantages, since the driver must know in advance which units are available in the vehicle and what actions can be performed by what unit. This requires a time-consuming familiarisation process, which proves particularly important in the case of a new or a hired vehicle. Furthermore, because of the increasing integration of different functions in different type of units, the user is often not actually aware of which unit is responsible for the execution of a particular desired action. The user may, for example, not know whether to select the telephone or the PC in order to send an SMS. Such related problems are likely to increase further in the future, in line with the increasing number of units and the increasing integration of functions.

DE 199 41 967 A1 discloses a method and apparatus for movement of activating elements, such as cursors on display units, which aims at providing a clear image of the cursor even at the edges of the display unit. By the use of at least one input element, depending on the function of the operating function on the display unit, and/or user specifically, the cursor can be moved selectively over the display unit or the image on the display unit can be moved under the cursor.

US 2001/0025376 A1 discloses an audio/video (A/V system) for motor vehicles including a ring local area network, a plurality of assorted A/V appliances, one or more output units, a control unit and at least one operating unit. The A/V appliances transmit information about their available audio/video presentations to the control unit via the network. The available A/V presentations are displayed on a display independently of the appliances and divided into classes. The result of this is an appliance-independent use interface on the basis of which the user can select the presentation independently of the appliances. The user chooses a presentation such as a radio station independently of which frequency or which A/V appliance is used to receive it. The control software is of modular design.

DE-A-199 39065 discloses a device according to the preamble of claim 1 and a method according to the preamble of claim 9.

The invention provides an improvement in the form of a device that facilitates the control of units forming part of the equipment in a vehicle. The device includes an input device for entering action commands for a set of pre-determined actions that can be performed by the units. The action commands are converted into a signal representing an associated action. A memory stores a relational database that has records for each action and an allocated unit that can perform that action. A control unit is connected to the input device, to the memory and to the units. The control unit on reception of a call signal for a required action from the input device, allocates, with the help of the relational database, a unit capable of performing the action requested, and outputs a control signal to the allocated unit by means of which the required action is caused to be performed by the allocated unit. The device is configured to continuously store a list of sub-menus and/or parameters of an action recently selected by a user.

By the use of a relational database, a flexible allocation of actions to units becomes possible, so that a clear and easy-to-operate user surface and menu structure can be realised, by means of which the driver of the vehicle can select the actions required. The actions should preferably be defined in a unit-independent way (such as '"phone", "navigate", etc.), so making time-consuming user-familiarisation processes unnecessary, because there is no longer any need for the driver to know about the units forming part of the vehicle equipment and what functions these are meant to fulfil.

It is particularly advantageous if an display device is provided on which the control unit can display an action-related menu structure for the selection of a specific action. This action-related menu structure may, for example, contain menu items such as "Navigation", "Communication", "Entertainment", "Information", "Vehicle operation", "Adaptation", etc. This kind of user guidance enables the driver to concentrate on the action to be carried out, without the need to select the specific technical unit required to realise the action in question.

The menu structure, which can for example be displayed on a touch screen, preferably provides for each action an individual field on the touch screen, by means of which the action in question can be selected. Actions can furthermore be combined, for example, in a main menu, to present generalised overall concepts. The difference to conventional unit-related menu structures is that the selection can be more intuitive, since it relates to the memory structure of the user, which also makes for easier acquisition of operating procedures and for reduced distraction of the driver.

In order to furthermore simplify operation, particular menu items can be provided on the touch screen, which are identical for all actions.

The menu structure may, for example, make provision for a field by means of which a certain number of the recently selected parameters of an action can be indicated (such as the locations recently headed for by the navigation system).

Preferentially, the menu structure may also make provision for a field by means of which a pre-determined group of parameters of an action can be indicated, whereby the group may comprise parameters that are determined by the user or are statistically evaluated. This corresponds in a certain way to the function "Favourites" as it is known from web browsers.

The selection of an action can also be supported in that a field is provided, by means of which the last shown sub-menu can be selected, corresponding to a backspace key.

To facilitate orientation it is preferred that similar fields of particular menu items that are common to all actions should be represented at the same location on the touch screen.

In a preferred embodiment, some of the actions can be further specified by parameters, such as that the action "Call" could be specified by the parameter "at tel. number XY". Such parameters can also be stored in the relational database, so that they can be selected by means of the device.

Ideally, the device should be able to perform all the actions that are not directly related to the driving process. This includes, for example, the selection of the most suitable lighting, ventilation and temperature of the vehicle interior, a general appreciation of the fuel consumption and the estimated remaining journey time, selection of the best route, provision of information such as the weather forecast or news, selection of music according to special trends or titles, or even making telephone calls or dictating letters. Ideally, all the units selectable by the device are completely controllable by the device. The device can be integrated within an on-board computer, or can be realised as part of an on-board computer with the corresponding software.

Units controlled by the device can include, for example, a mobile telephone, a radio, a CD player, a DVD player, a navigation device, air conditioning, a lighting unit, a fuel level indicator or a heater, but also any other devices that the user wants to control within his or her vehicle.

The invention also provides a method to facilitate the control of units forming part of the equipment in a vehicle. The method involves accessing a relational database with records wherein allocations between actions and units capable of performing the actions are stored. When an action is called by the user, a corresponding record identifies a unit capable of performing the action.

A device and method according to the invention, be it within the confines of a vehicle or in other surroundings, is also very helpful for the user because the integration of functions in technological devices is ever increasing, whereby the boundaries between the individual units are becoming more and more blurred. Nowadays it is, for example, possible to use a modem for sending e-mail, SMS or fax messages, and even to make telephone calls, whilst the same functions can also be realised by means of a mobile telephone. By integrating the operation of all the units by means of the device or method according to the invention, the user is saved to a large extent from the decision-making process of having to select a particular unit that will eventually perform the action that the user requires, or the user will at least be made aware of all possible options to this end. This helps the user to make the best possible use of even the more complex functions of his or her units, without having to spend time in manipulating the device in question. This also offers an ideal way for personalising such units, whereby, on account of using the relational database, the data need not to be entered or held redundant, and the personalisation so achieved can be used for all units (such as when using address listings or the listing of frequently visited locations or persons).

Further characteristics and advantages of the invention arise from the following description of a preferred embodiment, in connection with the attached drawings, where
- figure 1 is a schematic view of a device according to the invention;
- figure 2 is a view of a menu for use with the device of fig. 1; and
- figure 3 is a view of a sub-menu for use with the device of fig. 1.

The expression "forming part of the vehicle equipment" also comprises, in the context of this description, units temporarily fitted to or available in the vehicle, such as a mobile telephone or a CD player. It is only important that such units are embodied in such a way that they can be centrally controlled from the device or by means of the procedure according to the invention.

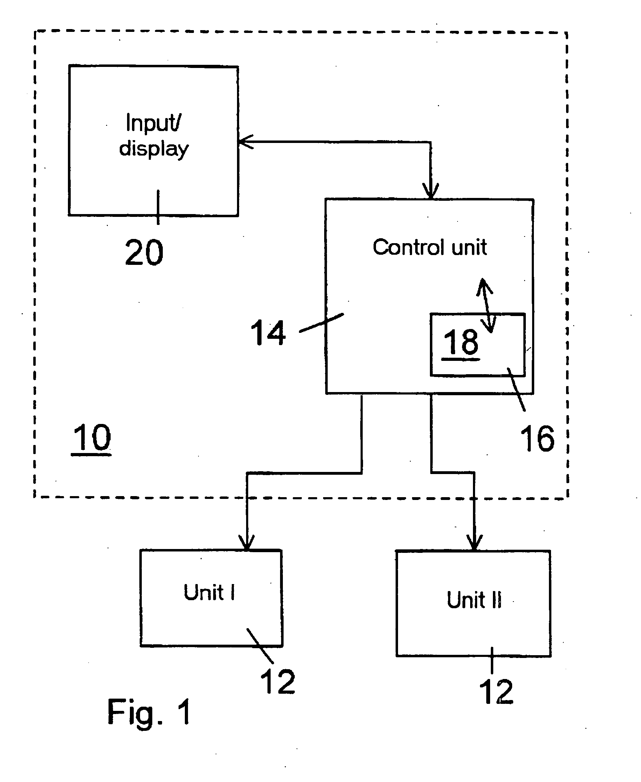

The device 10 represented in fig. 1 is intended to facilitate the centralised control of units 12 forming part of the vehicle equipment (not shown).

The units 12 can, for example, include an air conditioning or heating unit, a fuel level indicator, a mileage recorder, a seat adjustment device or the lighting installation, that is units that act directly in conjunction with the vehicle itself, but also, for example, a navigation device, a mobile telephone, a dictating device, a modem, a computer, a radio, a CD player, a DVD player, or a video set. These units can either by permanently installed in the vehicle, or they may be portable. In the latter case, they will have to be connected to the device by the user before they can be used.

A control unit 14 with a memory 16, and preferably with a micro processor or a computer, is connected to the units 12. The control unit is furthermore connected to an input/display unit 20 that may, for example, consist of a touch screen. The inputting and display devices may also be embodied as separate units.

A relational database 18 is stored in the memory 16. Database 18 contains a set of pre-determined actions that can be realised by one or more of the units 12. The database 18 furthermore contains records on the allocation of actions to the units 12 that can execute these actions. Pre-determined parameters, that can more specifically define the actions, (such as telephone numbers, MP3 titles, preferred air conditioning status, etc.) are furthermore preferably stored in the database 18.

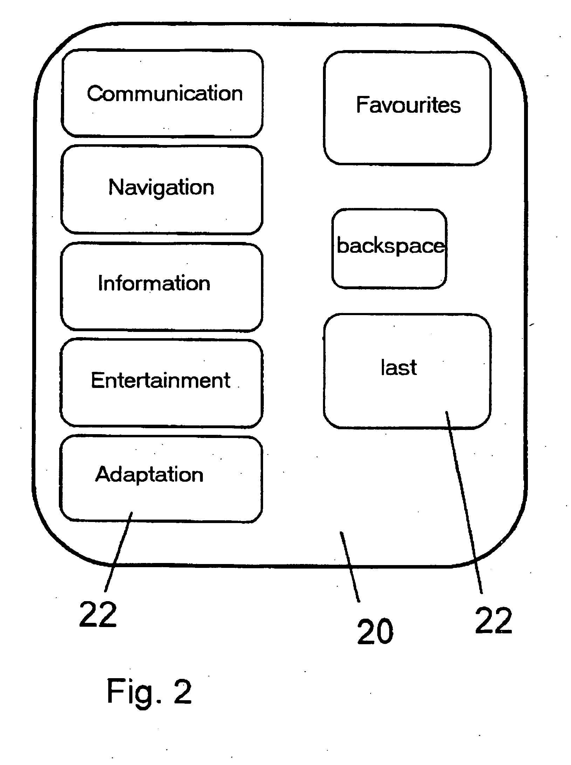

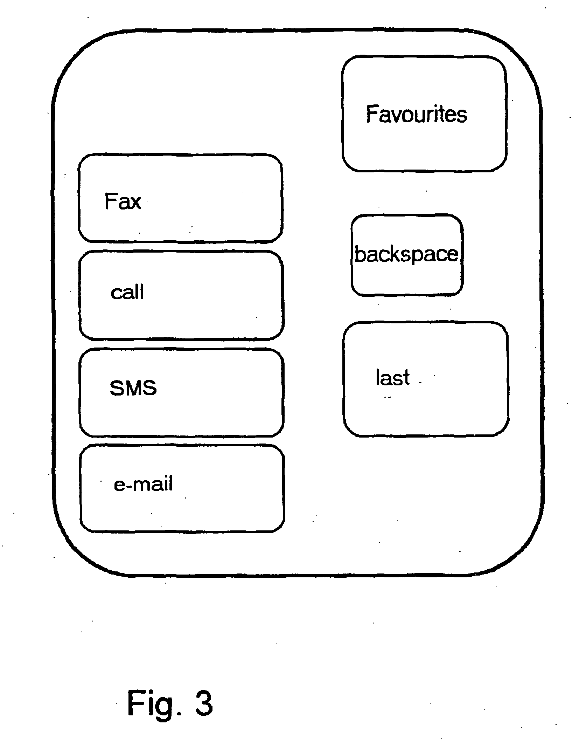

The user selects a required action by means of the input/display unit 20 with the aid of a special menu structure that shall be explained in more detail with reference to figures 2 and 3.

The menu structure is action-orientated instead of being unit-orientated, as is normally the case with onboard computers, that is, it aims at the action to be carried out. This structure is more responsive to human thinking than a conventional unit-orientated structure, since the user must not first identify the unit that will realise the action required, before the action itself can be selected. It is normally of no interest to the user which unit will perform a specific action. It is more likely that the user starts by selecting the action, and the selection of the unit, as shall be described in more detail, is executed automatically by the device 10.

In figure 2, the menu points "Communication" (such as making telephone calls), "Navigation" (such as map displays or navigating systems), "Information" (such as listening to the news or to determine fuel consumption), "Entertainment" (such as radio reception in different transmission modes, CD playing), and "Adaptation" (such as seat adjustment, air conditioning) have been selected as examples for possible actions. These menu points are represented on the input/display unit (touch screen) 20 in the form of fields 22. Each menu point leads to sub-menus (figure 3), from which the user can finally select a required action. The sub-menus may give rise to further sub-menus (such as telephone numbers). In figure 3, the fields "FAX", "telephone", "SMS" and "e-mail" have been provided as sub-menu points of the action field "Communication".

A signal representing the required action is transmitted from the input/display unit 20 to the control unit 14. The control unit 14 selects the unit 12 allocated to the action in question from the relational database 18 and transmits a control signal to the unit 12 that initiates the required action to be performed by the corresponding unit 12. This means that the user only has to select the action itself, and not the unit 12 that is to perform the action.

Actions can additionally be specified by means of sub-menu points and parameters that are either also stored in the database 18, or that are entered by the user into the input unit. As an example, an action could be selected from the main menu "Communication" and the sub-menu "send SMS", to which is added the parameter "to XY", or "navigate" (action) "to location Z" (parameter).

With a view to simplifying operation even more, the menu structure on the touch screen provides for a field that calls up a listing of "Favourites" (sub-menu points and/or parameters), which have been input either previously by the user or that have been determined statistically by the control unit by taking into account the most frequently selected choices (sub-menu points and/or parameters) by the user.

The preferred sub-menus and/or parameters of an action can, for example, be previously selected by the user as preferred sub-menus or parameters, or stored in an area of the memory 16, allocated for the purpose, by means of the control unit.

In a further embodiment of the device according to the invention, the preferred sub-menus and/or parameters of an action can be continuously determined by the control unit, in that the frequency of the selection of specific sub-menus and/ or parameters is statistically acquired and recorded, and that the most frequently selected sub-menus and/or parameters are stored in an area of the memory 16, allocated for the purpose, by means of the control unit.

In an analogue way to conventional web browsers, it is also possible to provide a field on the touch screen to enable access to a listing of the recently used sub-menus and/or parameters, or to return to the previous sub-menu and/or parameter. It is preferred that such fields within each sub-menu, called up by pressing and so selecting an action field, (such as SMS at the main menu "Communication") should be located at the same place (in this context see figures 2 and 3). It is also possible to provide special areas within the memory 16 in which are stored the most recently used sub-menus and/or parameters.

## Claims

1. A device to facilitate the control of units (12) forming part of an equipment in a vehicle, comprising
an input device (20) for the purpose of entering action calls for actions that are part of a set of pre-determined actions that can be performed by at least one of the units (12), and to transform action calls into a signal representing a corresponding action,
a memory (16) in which a relational database (18) is stored, said relational database containing records for allocating each action of said set to at least one unit (12) that can perform that action,
a control unit (14) that is connected to the input device (20), the memory (16) and the units (12),
the control unit (14) on reception of a signal representing a required action from the input device (20), accessing the relational database stored in the memory to assign the required action to an allocated unit (12) that can perform that action, and sending a control signal to the allocated unit (12) by means of which the performance of the required action by the allocated unit (12) is initiated, and
a display unit (20) connected to the control unit (14) and on which the control unit (14) can represent an action-related menu structure wherein main menu items are associated with actions,
wherein both the input device (20) and the display unit (20) are embodied in a touch screen, and a field is displayed on the touch screen for initiating the display of a pre-determined number of sub-menus recently selected by the user and/or parameters of an action,
**characterized in that** a list of sub-menus and/or parameters of an action recently selected by the user is continuously stored in the memory (16).

2. The device according to claim 1, where the menu structure includes at least one sub-menu with menu items that are the same for all actions.

3. The device according to claim 1 or claim 2, wherein the action-related menu structure contains action items selected from the group that comprises navigation, communication, entertainment, information, vehicle control and personalisation.

4. The device according to any one of claims 1 to 3, wherein the control unit (14) drives the touch screen so that a menu structure is displayed on the touch screen whose menu items are action-related, so that an action can be called from a set of actions stored in the relational database (18).

5. The device according to claim 4, wherein for each action a field is displayed on the touch screen, by means of which the corresponding action can be called.

6. The device according to any one of the claims 1 to 5, wherein a field is displayed on the touch screen for initiating the display of preferred sub-menus and/or parameters of an action on the touch screen.

7. The device according to claim 6, wherein a user can select on the touch screen preferred sub-menus and/or parameters of an action for storage in the memory (16).

8. The device according to any one of the previous claims, wherein the units (12) are selected from a group that comprises a mobile telephone, a radio reception unit, a CD player, a DVD player, a navigation system, an air conditioning unit, a lighting unit, a fuel status indicator and a heating system.

9. A method to facilitate control of units (12) forming part of a vehicle equipment, wherein
an action call is generated and received that identifies an action required by a user, the action being part of a pre-determined set of actions that can be performed by at least one of the units (12),
a relational database is accessed that contains records for storing allocations between units and actions that can be performed by the units, and a unit is selected that can perform the action required by the user,
a control signal is sent to the selected unit (12), by means of which execution of the required action by the selected unit (12) is initiated,
an action-related menu structure is represented wherein main menu items are associated with actions, and
a field is displayed on a touch screen for initiating the display of a pre-determined number of sub-menus recently selected by the user and/or parameters of an action,
**characterized in that** the method further comprises continuously storing a list of sub-menus and/or parameters of an action recently selected by the user.

## Patentansprüche

1. Vorrichtung zur Erleichterung der Steuerung von zur Ausstattung eines Fahrzeugs gehörenden Geräten (12), mit
einer Eingabevorrichtung (20) zum Eingeben von Aktionsabrufen für Aktionen, die zu einem Satz vorbestimmter, von wenigstens einem der Geräte (12) ausführbarer Aktionen gehören, und zum Wandeln von Aktionsabrufen in ein eine entsprechende Aktion repräsentierendes Signal,
einem Speicher (16), in dem eine relationale Datenbank (18) abgelegt ist,
wobei die relationale Datenbank Aufzeichnungen enthält, mit denen jede Aktion aus dem Satz wenigstens einem Gerät (12) zugeordnet ist, das diese Aktion ausführen kann,
einer Steuereinheit (14), die mit der Eingabevorrichtung (20), dem Speicher (16) und den Geräten (12) verbunden ist,
wobei die Steuereinheit (14) bei Empfang eines eine gewünschte Aktion repräsentierenden Signals von der Eingabevorrichtung (20) auf die im Speicher abgelegte relationale Datenbank zugreift und die gewünschte Aktion einem zugeordneten Gerät (12) zuweist, das diese Aktion ausführen kann, und ein Steuersignal an das zugeordnete Gerät (12) sendet, durch das die Ausführung der gewünschten Aktion durch das zugeordnete Gerät (12) ausgelöst wird, und
einer Anzeigevorrichtung (20), die mit der Steuereinheit (14) verbunden ist und auf der die Steuereinheit (14) eine aktionsbezogene Menüstruktur darstellen kann, bei der Hauptmenüpunkte Aktionen zugeordnet sind,
wobei sowohl die Eingabevorrichtung (20) als auch die Anzeigevorrichtung (20) in einem Touchscreen ausgeführt sind und auf dem Touchscreen ein Feld angezeigt ist, über das die Anzeige einer vorbestimmten Anzahl von durch den Benutzer kürzlich ausgewählten Untermenüs und/oder Parametern einer Aktion ausgelöst wird,
**dadurch gekennzeichnet, dass** im Speicher (16) laufend eine Liste von durch den Benutzer kürzlich ausgewählten Untermenüs und/oder Parametern einer Aktion abgespeichert wird.

2. Vorrichtung nach Anspruch 1, bei der die Menüstruktur wenigstens ein Untermenü mit Menüpunkten aufweist, die für sämtliche Aktionen gleich sind.

3. Vorrichtung nach Anspruch 1 oder Anspruch 2, bei der die aktionsbezogene Menüstruktur Aktionspunkte enthält, die aus der Navigation, Kommunikation, Unterhaltung, Information, Fahrzeugbedienung und Personalisierung umfassenden Gruppe ausgewählt sind.

4. Vorrichtung nach einem der Ansprüche 1 bis 3, bei der die Steuereinheit (14) den Touchscreen so ansteuert, dass auf dem Touchscreen eine Menüstruktur angezeigt wird, deren Menüpunkte aktionsbezogen sind, so dass eine Aktion aus einem in der relationalen Datenbank (18) abgelegten Satz von Aktionen abgerufen werden kann.

5. Vorrichtung nach Anspruch 4, bei der auf dem Touchscreen für jede Aktion ein Feld angezeigt wird, über das die jeweilige Aktion abgerufen werden kann.

6. Vorrichtung nach einem der Ansprüche 1 bis 5, bei der auf dem Touchscreen ein Feld angezeigt wird, über das die Anzeige von bevorzugten Untermenüs und/oder Parametern einer Aktion auf dem Touchscreen ausgelöst wird.

7. Vorrichtung nach Anspruch 6, bei der ein Benutzer auf dem Touchscreen bevorzugte Untermenüs und/oder Parameter einer Aktion zum Abspeichern im Speicher (16) auswählen kann.

8. Vorrichtung nach einem der vorhergehenden Ansprüche, bei der die Geräte (12) aus einer Gruppe ausgewählt sind, die ein Mobiltelefon, ein Radiogerät, einen CD-Spieler, einen DVD-Spieler, ein Navigationssystem, eine Klimaanlage, eine Beleuchtungsanlage, eine Tankanzeige bzw. ein Heizsystem umfasst.

9. Verfahren zur Erleichterung der Steuerung von zu einer Fahrzeugausstattung gehörenden Geräten (12), bei dem
ein Aktionsabruf erzeugt und empfangen wird, der eine von einem Benutzer gewünschte Aktion kennzeichnet, wobei die Aktion zu einem vorbestimmten Satz von Aktionen gehört, die von wenigstens einem der Geräte (12) ausführbar sind,
auf eine relationale Datenbank zugegriffen wird, die Aufzeichnungen enthält, über die Zuordnungen zwischen Geräten und von den Geräten ausführbaren Aktionen abgelegt werden, und ein Gerät ausgewählt wird, das die vom Benutzer gewünschte Aktion ausführen kann,
ein Steuersignal an das ausgewählte Gerät (12) gesendet wird, durch das die Ausführung der gewünschten Aktion durch das ausgewählte Gerät (12) ausgelöst wird,
eine aktionsbezogene Menüstruktur dargestellt wird, bei der Hauptmenüpunkte Aktionen zugeordnet sind, und
auf einem Touchscreen ein Feld angezeigt wird, über das die Anzeige einer vorbestimmten Anzahl von durch den Benutzer kürzlich ausgewählten Untermenüs und/oder Parametern einer Aktion ausgelöst wird,
**dadurch gekennzeichnet, dass** bei dem Verfahren ferner laufend eine Liste von durch den Benutzer kürzlich ausgewählten Untermenüs und/oder Parametern einer Aktion abgespeichert wird.

## Revendications

1. Dispositif pour faciliter la commande d'appareils (12) faisant partie d'un équipement dans un véhicule, comportant
un dispositif d'entrée (20) pour entrer des demandes d'actions pour des actions faisant partie d'un ensemble d'actions prédéterminées pouvant être exécutées par au moins l'un des appareils (12), et pour transformer des demandes d'actions en un signal représentant une action correspondante,
une mémoire (16) dans laquelle est mémorisée une base de données relationnelle (18), la base de données relationnelle contenant des enregistrements pour associer chaque action de l'ensemble à au moins un appareil (12) pouvant exécuter cette action,
une unité de commande (14) reliée au dispositif d'entrée (20), à la mémoire (16) et aux appareils (12),
l'unité de commande (14) accédant à la base de données relationnelle mémorisée dans la mémoire lors de la réception d'un signal du dispositif d'entrée (20) représentant une action requise afin d'attribuer l'action requise à un appareil associé (12) pouvant exécuter cette action, et envoyant un signal de commande à l'appareil attribué (12), au moyen duquel l'exécution de l'action requise par l'appareil attribué (12) est initiée, et
un appareil d'affichage (20) qui est relié à l'unité de commande (14) et sur lequel l'unité de commande (14) peut représenter une structure de menu relative à des actions dans laquelle des options de menu principal sont associées à des actions,
tant le dispositif d'entrée (20) que l'appareil d'affichage (20) étant réalisés dans un écran tactile, et une zone étant affichée sur l'écran tactile afin d'initier l'affichage d'un nombre prédéterminé de sous-menus récemment choisis par l'utilisateur et/ou de paramètres d'une action,
**caractérisé en ce qu'**une liste de sous-menus et/ou de paramètres d'une action récemment choisis par l'utilisateur est continuellement mémorisée dans la mémoire (16).

2. Dispositif selon la revendication 1, dans lequel la structure de menu comporte au moins un sous-menu présentant des options de menu qui sont identiques pour toutes les actions.

3. Dispositif selon la revendication 1 ou la revendication 2, dans lequel la structure de menu relative à des actions contient des options d'action choisies parmi le groupe comprenant la navigation, la communication, le divertissement, l'information, la commande de véhicule et la personnalisation.

4. Dispositif selon l'une des revendications 1 à 3, dans lequel l'unité de commande (14) pilote l'écran tactile de telle sorte qu'une structure de menu dont les options de menu sont relatives à des actions est affichée sur l'écran tactile de sorte qu'il est possible d'appeler une action parmi un ensemble d'actions mémorisées dans la base de données relationnelle (18).

5. Dispositif selon la revendication 4, dans lequel une zone est affichée sur l'écran tactile pour chaque action, à l'aide de laquelle l'action correspondante peut être appelée.

6. Dispositif selon l'une des revendications 1 à 5, dans lequel une zone est affichée sur l'écran tactile pour initier l'affichage sur l'écran tactile de sous-menus et/ou de paramètres d'une action préférés.

7. Dispositif selon la revendication 6, dans lequel un utilisateur peut choisir sur l'écran tactile des sous-menus et/ou des paramètres d'une action préférés pour la mémorisation dans la mémoire (16).

8. Dispositif selon l'une des revendications précédentes, dans lequel les appareils (12) sont choisis parmi un groupe constitué par un téléphone portable, un appareil de radio, un lecteur de CD, un lecteur de DVD, un système de navigation, une installation de climatisation, une installation d'éclairage, une jauge de carburant et un système de chauffage.

9. Procédé pour faciliter la commande d'appareils (12) faisant partie d'un équipement automobile, dans lequel
une demande d'action identifiant une action requise par un utilisateur est générée et est reçue, l'action faisant partie d'un ensemble prédéterminé d'actions pouvant être exécutées par au moins l'un des appareils (12),
il est accédé à une base de données relationnelle contenant des enregistrements pour la mémorisation d'associations entre des appareils et des actions pouvant être exécutées par les appareils, et un appareil est choisi lequel peut exécuter l'action requise par l'utilisateur,
un signal de commande au moyen duquel l'exécution de l'action requise par l'appareil (12) choisi est initiée est envoyé à l'appareil (12) choisi,
une structure de menu relative à des actions dans laquelle des options de menu principal sont associées à des actions est représentée, et
une zone est affichée sur un écran tactile pour initier l'affichage d'un nombre prédéterminé de sous-menus récemment choisis par l'utilisateur et/ou de paramètres d'une action,
**caractérisé en ce que** le procédé comprend en outre la mémorisation continuelle d'une liste de sous-menus et/ou de paramètres d'une action récemment choisis par l'utilisateur.
